# EUROPÄISCHE PATENTSCHRIFT

(11) **EP 1 513 665 B1**
(45) Veröffentlichungstag und Bekanntmachung des Hinweises auf die Patenterteilung: **20.08.2008**
(21) Anmeldenummer: 03735363.8
(22) Anmeldetag: 07.05.2003
(51) Int. Cl.: B29C 45/00, F28F 21/06

(54) **VERFAHREN ZUR HERSTELLUNG EINES WÄRMETAUSCHERKASTENS EINES KRAFTFAHRZEUGES**
METHOD FOR PRODUCING A HEAT EXCHANGER BOX OF A MOTOR VEHICLE
PROCEDE DE FABRICATION D'UN BOITIER POUR ECHANGEUR THERMIQUE D'UN VEHICULE AUTOMOBILE

(30) Priorität: 31.05.2002 DE 10224296
(43) Veröffentlichungstag der Anmeldung: 16.03.2005
(73) Patentinhaber: Behr GmbH & Co. KG, 70469 Stuttgart (DE)
(72) Erfinder: KÄMMLER, Georg, 70439 Stuttgart (DE)
(74) Vertreter: Grauel, Andreas
(86) Internationale Anmeldenummer: PCT/EP2003/004764
(87) Internationale Veröffentlichungsnummer: WO 2003/101702

(56) Entgegenhaltungen:
- EP-A- 1 026 198
- US-A- 5 246 065
- DATABASE WPI Section Ch, Week 198748 Derwent Publications Ltd., London, GB; Class A18, AN 1987-337845 XP002253008 -& JP 62 241940 A (MITSUI PETROCHEM IND CO LTD), 22. Oktober 1987 (1987-10-22)
- DATABASE WPI Section Ch, Week 199709 Derwent Publications Ltd., London, GB; Class A18, AN 1997-095551 XP002253011 -& JP 08 333491 A (MITSUI TOATSU CHEM INC) , 17. Dezember 1996 (1996-12-17)
- DATABASE WPI Section Ch, Week 200026 Derwent Publications Ltd., London, GB; Class A23, AN 2000-298582 XP002253009 -& JP 2000 086759 A (KURARAY CO LTD), 28. März 2000 (2000-03-28)
- DATABASE WPI Section Ch, Week 199804 Derwent Publications Ltd., London, GB; Class A26, AN 1998-037150 XP002253010 -& JP 09 291213 A (TORAY IND INC), 11. November 1997 (1997-11-11)
- PATENT ABSTRACTS OF JAPAN vol. 011, no. 039 (M-559), 5. Februar 1987 (1987-02-05) -& JP 61 206611 A (MITSUBISHI MONSANTO CHEM CO), 12. September 1986 (1986-09-12)

## Beschreibung

Die Erfindung betrifft ein Verfahren zur Herstellung eines Wärmetauscherkastens, insbesondere für einen Wärmetauscher für ein Kraftfahrzeug, gemäß dem Oberbegriff des Anspruchs 1.

Herkömmliche, spritzgegossene Kunststoff-Wärmetauscherkästen benötigen Hilfsmittel, wie beispielsweise Spannrahmen oder -leisten. Diese müssen direkt nach dem Verlassen des Spritzgusswerkzeuges, d.h. der Form, in den noch heißen Kunststoff-Wärmetauscherkasten eingesetzt werden und in der Regel bis zum Verbauen auf dem Wärmetauscher-Kastenboden, d.h. bis zum Verpressen mit dem Kastenboden unter Einlegung einer Dichtung, im Kunststoff-Wärmetauscherkasten verbleiben, da der Wärmetauscherkasten auf Grund seiner kastenförmigen Geometrie ohne dieses Hilfsmittel innerhalb von kürzester Zeit einfallen würde. Dieses Einfallen der Kunststoff-Wärmetauscherkästen würde zu Fehlern während des Verschließens, d.h. beim Verpressen, führen.

Aus der JP 62241940 ist eine Kunststoffzusammensetzung zum Spritzen von Automobil-Wärmetauschertanks bekannt zur Erzielung von guten mechanischen Festigkeitseigenschaften selbst wenn das Material mit einem Antifrostschutzmittel im Wärmetauschertank über einen längeren Zeitraum in Kontakt kommt.

Die JP 08333491 offenbart eine Thermoplastharzzusammensetzung zum Hochgeschwindigkeitsspritzgießen.

Aus der EP 1166991 ist ein Verfahren bekannt, bei dem ein physikalisches Zusatzmittel einer Spritzgießmaschine zugeführt wird.

Aus der US 5246065 ist ein Verfahren gemäß dem Oberibegriff des Anspruchs 1 bekannt.>

Es ist Aufgabe der Erfindung, ein verbessertes Verfahren zur Herstellung eines Wärmetauscherkastens zur Verfügung zu stellen.

Diese Aufgabe wird gelöst durch ein Verfahren mit den Merkmalen des Anspruchs 1. Vorteilhafte Ausgestaltungen sind Gegenstand der Unteransprüche.

Erfindungsgemäß wird auf Grund der beschleunigten Kristallisation infolge der Zugabe eines Mittels (Kristallisationsbeschleuniger) oder der Verwendung eines die Kristallisation beschleunigenden Verfahrens eine schnellere Herstellung der Kunststoff-Wärmetauscherkästen ermöglicht. Dabei können die Kunststoff-Wärmetauscherkästen bereits bei Temperaturen von ca. 120°C aus dem Spritzgusswerkzeug entnommen und ein Spannrahmen in die Wärmetauscher-Kästen eingesetzt werden, wohingegen gemäß dem Stand der Technik die Kunststoff-Wärmetauscherkästen in der Spritzgussform bis auf ca. 80°C abkühlen müssen, so dass durch die vorliegende Erfindung eine schnellere Produktion mit deutlich verringerten Zykluszeiten und somit eine bessere Ausnutzung der Spritzgusswerkzeuge ermöglicht wird. Ferner werden die Materialeigenschaften des verwendeten Kunststoffes verbessert. So erhält man festere, schlagzähere Teile mit einem höheren E-Modul. Außerdem treten geringere Eigenspannungen in den Teilen auf, was zu stabileren Teilen führt.

Gemäß einer ersten Variante wird dem Kunststoff ein Kristallisationsbeschleuniger zugegeben. Hierbei können bspw. Ruß oder mineralische Stoffe verwendet werden. Die Kristallisationsgeschwindigkeit wird durch die Größe und die Menge der zugegebenen Kristallisationsbeschleuniger beeinflusst. So beschleunigen insbesondere kleine Partikel und eine große Anzahl hiervon den Kristallisationsvorgang stärker als große Partikel in geringer Anzahl.

Gemäß der Erfindung werden dem Kunststoff physikalische Treibmittel, d.h. insbesondere die Treibgase N₂ und/oder CO₂ unter Druck, insbesondere zwischen 50 und 250 bar, zugeführt.

Dabei erfolgt die Zuführung des Treibmittels bei der Schnecke, d.h. während des Plastifizierens des Kunststoffes, Auf Grund des Treibmittels bilden sich kleine Poren im Kunststoff, wodurch der Volumenschwund infolge des Abkühlens des Kunststoffes ausgeglichen wird, so dass kein oder kaum noch plastifizierter Kunststoff unter Druck nachgeführt werden muss. Die Verwendung physikalischer Treibmittel ist insbesondere für dünnwandige Teile geeignet.

Gemäß dem Stand der Technik werden dem Kunststoff chemische Treibmittel zugefügt. Hierbei kann es sich um exotherm, d.h. wärmeerzeugend, oder endotherm, d.h. wärmeentziehend, wirkende Treibmittel handeln. Hierbei werden exotherme Treibmittel in der Regel unter einem Druck von 5 bis 30 bar verwendet, bei endothermen Treibmitteln liegen geringere Drücke vor. Auf Grund einer chemischen Reaktion wird üblicherweise CO₂ als Treibgas erzeugt. Als Treibmittel kann vorzugsweise ein mit Polyäthylen ummanteltes Treibmittel in Granulatform verwendet werden, welches dem Kunststoffgranulat vor der Plastifizierung in der Spritzgießmaschine beigemischt wird. Als Treibmittel kommen bspw. Azo- oder Diazoverbindungen in Frage. Auf Grund der Einfachheit der Zumischung und keiner oder nur gering veränderter Spritzgießmaschinen sind die Kosten für die Anlage geringer als bei der Verwendung physikalischer Treibmittel.

Vorzugsweise erfolgt eine Beschleunigung der Relaxation, d.h. der Entspannung, so dass die Kunststoff-Wärmetauscherkästen bei der Weiterverarbeitung, also bei der Entnahme der Spannrahmen und dem Einsetzen in die Kastenböden, stabiler sind, d.h. dann eine langsamere Relaxation stattfindet. In den herrschenden Temperaturbereichen erhöht sich bei einer Temperaturerhöhung um 10°K die Relaxationsgeschwindigkeit um mehr als den Faktor zwei.

Vorzugsweise handelt es sich beim Kunststoff um Polyamid, Polyphenylensulfid oder Polypropylen, wobei der Kunststoff vorzugsweise mit Glasfasern verstärkt ist.

Erfindungsgemäß wird der Wärmetauscherkasten bei einer höheren Oberflächentemperatur als gemäß dem Stand der Technik (ca. 80°C), insbesondere bei einer Oberflächentemperatur von 120° +/- 10°C aus dem Spritzgusswerkzeug genommen. Dabei wird direkt nach der Entnahme des Wärmetauscherkastens aus dem Spritzgusswerkzeug ein Spann-Hitfsmittel, bspw. ein Spannrahmen, der ggf. auch gekühlt werden kann, eingesetzt.

Im folgenden wird die Erfindung anhand eines Ausführungsbeispiels unter Bezugnahme auf die Zeichnung im einzelnen erläutert. In der Zeichnung zeigen:

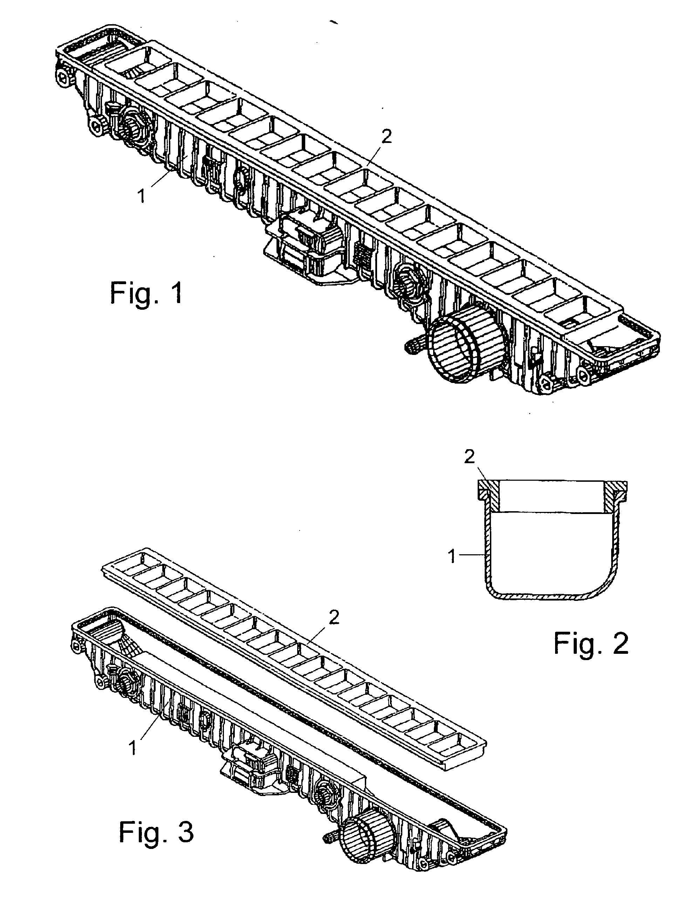

- Fig. 1: einen Wärmetauscherkasten mit einer eingesetzten Spannleiste,
- Fig. 2: einen Schnitt durch Fig. 1, und
- Fig. 3: den Wärmetauscherkasten und die Spannleiste in getrennter Darstellung.

Ein Wärmetauscherkasten 1 aus dem Stand der Technik einer Klimaanlage eines Kraftfahrzeugs besteht aus mit Glasfasern verstärktem Polyamid. Zur Herstellung des Wärmetauscherkastens 1 wird einem in Granulatform vorliegenden, mit Glasfasern versetzten Polyamid zur Beschleunigung der Kristallisation ein chemisches, exotherm wirkendes Treibmittel in Granulatform, lisation ein chemisches, exotherm wirkendes Treibmittel in Granulatform, wobei das Treibmittel mit Polyäthylen ummantelt ist, zugegeben, die Granulate miteinander vermischt und einer Spritzgießmaschine zugeführt.

In einer Schnecke der Spritzgießmaschine erfolgt auf bekannte Weise eine Plastifizierung der Granulate zu einer Kunststoffmasse infolge von Wärme (240-290°C) und des Druckes. Diese plastische Kunststoffmasse wird in ein Spritzgusswerkzeug gefüllt. Aufgrund hohen Temperaturen reagiert das Treibmittel unter Abgabe von Wärmeenergie unter Bildung von CO₂. Das Treibmittel bzw. das entstandene CO₂ bewirkt ein schnelleres Ausfüllen des Spritzgusswerkzeuges, da ein geringerer Volumenschwund der Kunststoffmasse beim Abkühlen auftritt, so dass keine oder nur eine minimale Menge plastifizierter Kunststoffmasse zum Ausgleich des Volumenschwunds nachgeschoben werden muss.

Im Spritzgusswerkzeug verbleibt die Kunststoffmasse bis die Form ausgefüllt und eine gewisse Kristallisation und Relaxation erfolgt ist. Anschließend wird das Spritzgusswerkzeug geöffnet, der Wärmetauscherkasten 1 entnommen und sofort ein Spannrahmen 2 eingesetzt, um ein Einfallen des Wärmetauscherkastens 1 zu verhindern. Gemäß dem erfindungsgemäßen Verfahren hat der Wärmetauscherkasten 1 bei der Entnahme eine Oberflächentemperatur von ca. 120°C. Dabei kann der Spannrahmen 2 gekühlt werden.

Zur Weiterverarbeitung wird um einen Aluminium-Kastenboden eine Gummischnur-Dichtung gelegt, der Spannrahmen 2 aus dem Wärmetauscherkasten 1 entfernt, möglichst schnell, d.h. innerhalb von ca. 30-60 Sekunden, der Wärmetauscherkasten 1 auf den Aluminium-Kastenboden mit Gummischnur-Dichtung gelegt und in einer Presse verpresst.

## Patentansprüche

1. Verfahren zur Herstellung eines Wärmetauscherkastens (1) aus Kunststoff eines Kraftfahrzeuges mittels Spritzgießen wobei dem Kunststoff ein Kristallisationsbeschleuniger zugegeben wird **gekennzeichnet durch** folgende Verfahrensschritte:
- dem Kunststoff wird ein physikalisches Treibmittel unter Druck zwischen 50 und 250 bar während des Plastifizierens des Kunststoffs zugeführt
- der Wärmetauscherkasten (1) wird bereits bei einer Oberflächentemperatur von 120°C +/- 10°C aus einem Spritzgusswerkzeug genommen
- in den Wärmetauscherkasten wird direkt nach der Entnahme aus dem Spritzgusswerkzeug ein Spannrahmen eingesetzt.

2. Verfahren nach Anspruch 1, **dadurch gekennzeichnet, dass** als physikalisches Treibmittel N₂ und/oder CO₂ unter Druck zugeführt werden.

3. Verfahren nach einem der vorhergehenden Ansprüche, **dadurch gekennzeichnet, dass** der Kunststoff Polyamid, Polyphenylensulfid oder Polypropylen ist.

4. Verfahren nach einem der vorhergehenden Ansprüche, **dadurch gekennzeichnet, dass** der Kunststoff mit Glasfasem verstärkt ist.

## Claims

1. Method for producing a heat exchanger box (1) from plastic for a motor vehicle by injection moulding, such that a crystallisation accelerator is added to the plastic, **characterised by** the following process steps:
- a physical foaming agent is added to the plastic under a pressure between 50 and 250 bar during the plasticisation of the plastic,
- the heat exchanger box (1) is extracted from an injection moulding die already at the surface temperature of 120°C ± 10°C,
- immediately after extraction from the injection moulding die, a tenting frame is inserted into the heat exchanger box (1).

2. Method according to Claim 1, **characterised in that** N₂ and/or CO₂ under pressure is/are added as the physical foaming agent.

3. Method according to either of the preceding claims, **characterised in that** the plastic is polyamide, polyphenylene sulphide or polypropylene.

4. Method according to any of the preceding claims, **characterised in that** the plastic is reinforced with glass fibres.

## Revendications

1. Procédé de fabrication d'un caisson d'échangeur de chaleur (1), en matière plastique, prévu pour un véhicule automobile, en utilisant le moulage par injection, un accélérateur de cristallisation étant ajouté à la matière plastique,
**caractérisé par** les étapes de procédé qui suivent :
- un agent d'expansion physique sous pression, entre 50 bars et 250 bars, est fourni à la matière plastique pendant sa plastification,
- le caisson d'échangeur de chaleur (1) est extrait d'un outil de moulage par injection dès qu'une température de surface de 120°C +/- 10°C est atteinte,
- un cadre de serrage est introduit dans le caisson d'échangeur de chaleur directement après que celui-ci a été extrait de l'outil de moulage par injection.

2. Procédé selon la revendication 1, **caractérisé en ce que** du diazote (N₂) et / ou du dioxyde de carbone (CO₂) est fourni, sous pression, comme agent d'expansion physique.

3. Procédé selon l'une ou l'autre des revendications précédentes, **caractérisé en ce que** la matière plastique est un polyamide, du sulfure de polyphénylène ou du polypropylène.

4. Procédé selon l'une quelconque des revendications précédentes, **caractérisé en ce que** la matière plastique est renforcée avec des fibres de verre.
